# EUROPÄISCHE PATENTSCHRIFT

(11) **EP 4 327 168 B1**
(45) Veröffentlichungstag und Bekanntmachung des Hinweises auf die Patenterteilung: **02.04.2025**
(21) Anmeldenummer: 22754328.7
(22) Anmeldetag: 18.07.2022
(51) Int. Cl.: G05B 19/042, G05B 19/418, G05B 23/02

(54) **GRANULARE DARSTELLUNG EINES LADEZUSTANDS WEBBASIERTER ELEMENTE EINES LEITSYSTEMS FÜR EINE TECHNISCHE ANLAGE**
GRANULAR DISPLAY OF A LOADING STATE OF WEB-BASED ELEMENTS OF A CONTROL SYSTEM FOR A TECHNICAL PLANT
REPRÉSENTATION GRANULAIRE D'UN ÉTAT DE CHARGE D'ÉLÉMENTS FONDÉS SUR LE WEB D'UN SYSTÈME DE GUIDAGE POUR UNE INSTALLATION TECHNIQUE

(30) Priorität: 21.07.2021 EP 21187067
(43) Veröffentlichungstag der Anmeldung: 28.02.2024
(73) Patentinhaber: Siemens Aktiengesellschaft, 80333 München (DE)
(72) Erfinder: KLUGE, Georg, 76351 Linkenheim (DE); LUTZ, Benjamin, 76327 Pfinztal (DE)
(74) Vertreter: Siemens Patent Attorneys
(86) Internationale Anmeldenummer: PCT/EP2022/070056
(87) Internationale Veröffentlichungsnummer: WO 2023/001760

(56) Entgegenhaltungen:
- EP-A1- 3 617 825
- EP-A1- 3 623 891
- WO-A1-2009/046095
- SABINE MUSIL ED - THOMAS GRECHENIG ET AL: "Beyond bars and hour glasses: Designing performance and progress indicators", 20 September 1993, HUMAN COMPUTER INTERACTION, SPRINGER BERLIN HEIDELBERG, BERLIN, HEIDELBERG, PAGE(S) 329 - 337, ISBN: 978-3-540-57312-8, XP019177811

## Beschreibung

Die Erfindung betrifft ein Leitsystem für eine technische Anlage, insbesondere Prozess- oder Fertigungsanlage, das einen Operator Station Server und einen Operator Station Client aufweist, wobei der Operator Station Server dazu ausgebildet ist, zur Bedienung und Beobachtung ein Anlagenbild der technischen Anlage an den Operator Station Client zu übertragen, wobei das Anlagenbild eine Mehrzahl von Bildelementen umfasst, und wobei der Operator Station Client dazu ausgebildet ist, das Anlagenbild mit der Mehrzahl von Bildelementen einem Operator der technischen Anlage visuell darzustellen, und wobei das Leitsystem einen Visualisierungsdienst aufweist, der zu einem ersten Teil auf dem Operator Station Server und zu einem zweiten Teil auf dem Operator Station Client implementiert ist. Außerdem betrifft die Erfindung die Verwendung eines Leitsystems und ein Verfahren zur visuellen Darstellung eines Anlagenbildes einer technischen Anlage.

Für die Bedienung und Beobachtung verfahrenstechnischer Anlagen erstellen Leitsysteme der verfahrenstechnischen Anlagen symbolische Anlagenbilder, die die verfahrenstechnischen Zusammenhänge - insbesondere zwischen einzelnen Prozessobjekten der verfahrenstechnischen Anlagen - abstrahiert darstellen.

Anlagenbilder setzen sich aus statischen Symbolen (z.B. Leitungen, Rechtecke, usw.), dynamisierten Symbolen (z.B. Leitungen mit Farbumschlag oder Rechtecke mit Füllständen, die sich in Abhängigkeit von Prozessmesswerten ändern), Blocksymbolen (zur dynamisierten Visualisierung verfahrenstechnischer Prozessobjekte), komplexen Controls (z.B. Trendanzeigen, Meldefolgeanzeigen, usw.) und Containern zusammen, in welchen Inhalte aus unabhängigen und eigenständige Quellen visualisiert werden können. Bei diesen Quellen kann es sich beispielsweise um Webcams, Anlagenbilder modularer Anlagenteile (sogenannte "Package Units"), Apps (z.B. Regleroptimierer, KPI-Berechnungen) und dergleichen handeln.

Die Container werden durch unterschiedliche Technologien realisiert. In modernen weborientierten Leitsystemen können hierzu sogenannte "iFrames" verwendet werden, die beispielsweise in der von der Firma SIEMENS verwendeten SWAC-Technologie Anwendung finden (SWAC steht hierbei für "Siemens Web Application Collaboration").

Auch die zuvor genannten komplexen Controls (Trendanzeigen, XY-Graphen, Meldefolgeanzeigen, SFC-Schrittketten, CFC-Visualisierung, Batch, usw.) können mithilfe von Containern in Anlagenbilder eingebettet werden, da so die zugrunde liegenden Applikationen serverseitig entkoppelt und verteilt werden können, um ein höheres Maß an Robustheit zu erreichen.

Moderne Anlagenbilder sind somit heterogen, da diese Anlagenbilder nicht durch eine einzige Applikation (z.B. Plant Display) dynamisiert werden, sondern durch viele unterschiedliche Applikationen, die auch auf unterschiedlichen Server lokalisiert sein können (Alarm Control, Trend Control, Webcam Control...). Diese Modularität ist zur Adressierung von Industrie 4.0 Anforderungen (vor allem hinsichtlich flexibler, modularer und dynamisch rekonfigurierbarer Anlagen) sinnvoll und notwendig, stellt jedoch die Visualisierung der heterogenen Anlagenbildern in Operator Station Clients vor entsprechende Herausforderungen, insbesondere in Hinblick auf Stabilität, Zuverlässigkeit und Leistungsfähigkeit der Operator Station Clients.

Eine Herausforderung derartig gestalteter Anlagenbilder ist neben der Dynamisierung auch der so genannte Bildaufschlag. Auch wenn das Anlagenbild für den Operator scheinbar aufgeschlagen ist und Blocksymbole dynamisiert werden, bedeutet dies jedoch nicht zwangsläufig, dass auch die darin enthaltenen komplexen Controls bereits vollständig oder auch nur teilweise geladen sind. Wird beispielsweise in einem Anlagenbild eine Meldefolgeanzeige mit einer komplexen Query (archivierte Diagnosedaten für ganze Anlagenteile) verwendet, so kann es mehrere Sekunden dauern, bis die dazu notwendigen Inhalte aus den Archiven ausgelesen und dargestellt werden.

Für den Zeitraum unmittelbar nach der Anlagenbildaufschaltung bleibt der Inhalt der projektierten Meldefolgeanzeige "weiß" und der Operator könnte fälschlicherweise annehmen, dass keine Diagnosemeldungen vorliegen und zum nächsten Anlagenbild im Zuge seiner Beobachtung wechseln. Es besteht somit die Gefahr, dass (falsche) Entscheidungen auf Grundlage nicht vollständig geladener Anlagenbilder getroffen werden, insbesondere deshalb, weil weder eine Lösung noch ein Lösungsansatz bekannt sind, den Ladezustand eines heterogenen Anlagenbildes zu ermitteln und dem Operator kenntlich zu machen. Bekannte Leitsysteme sind beispielsweise in der WO 2020/064712 A1 und der EP 3680740 A1 offenbart.

In der EP 3 623 891 A1 ist ein Leitsystem für eine technische Anlage mit einem Individualisierungsdienst offenbart.

In SABINE MUSIL ED - THOMAS GRECHENIG ET AL: "Beyond bars and hour glasses: Designing performance and progress indicators", 20. September 1993 (1993-09-20), HUMAN COMPUTER INTERACTION, SPRINGER BERLIN HEIDELBERG, BERLIN, HEIDELBERG, PAGE(S) 329 - 337, XP019177811, ISBN: 978-3-540-57312-8, werden Designmöglichkeiten für Performanz- und Fortschrittsanzeigen offenbart.

Die EP 3 617 825 A1 offenbart ein Verfahren zur Identifizierung einer Ausgangsalarmmeldung einer Alarmmeldungshäufung in einem Leitsystem einer technischen Anlage.

In der WO 2009/046095 A1 ist ein System für die Implementierung eines Servers für die Bedienung und Beobachtung einer Prozessanlage offenbart.

Der Erfindung liegt die Aufgabe zugrunde, ein Leitsystem für eine technische Anlage anzugeben, das einem Operator des Leitsystems einen Ladezustand und damit eine Verlässlichkeit eines von dem Leitsystem dargestellten Anlagenbildes vermitteln kann.

Diese Aufgabe wird gelöst durch ein Leitsystem für eine technische Anlage, insbesondere eine Fertigungs- oder Prozessanlage, mit den Merkmalen des Anspruchs 1. Zudem wird die Aufgabe gelöst durch die Verwendung eines Leitsystems zum Betrieb einer technischen Anlage gemäß Anspruch 6. Zudem wird die Aufgabe gelöst durch ein Verfahren zur visuellen Darstellung eines Anlagenbildes einer technischen Anlage gemäß Anspruch 7. Vorteilhafte Weiterbildungen ergeben sich aus den abhängigen Ansprüchen.

Ein Leitsystem eingangs beschriebener Art ist erfindungsgemäße dadurch gekennzeichnet, dass der Visualisierungsdienst dazu ausgebildet ist, eine Information über einen aufsummierten Übertragungsstatus der Mehrzahl von Bildelementen von dem Operator Station Server zu dem Operator Station Client zu ermitteln und dem Operator des Leitsystems visuell darzustellen, wobei der aufsummierte Übertragungsstatus einen booleschen Wahrheitswert darstellt.

Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem kann neben dem Operator Station Server und dem Operator Station Client beispielsweise auch sogenannte prozess- oder fertigungsnahe Komponenten umfassen, die zur Ansteuerung von Aktoren bzw. Sensoren dienen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungssystemen (wie einem Automatisierungsgerät) der technischen Anlage her und gibt Daten der technischen Anlage an sogenannte "Operator Station Clients" weiter, die zur Bedienung und Beobachtung eines Betriebs der einzelnen Funktionselemente der technischen Anlage dienen.

Der Operator Station Server kann selbst über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Bei dem Anlagenbild, welches der Operator Station Server an den Operator Station Client zur visuellen Darstellung überträgt, handelt es sich um ein üblicherweise für Leitsysteme verwendetes Bedienbild, welches grafische Repräsentationen einzelner Elemente der technischen Anlage umfasst und zur Darstellung eines Status der einzelnen Elemente, eines (z.B. verfahrenstechnischen) Zusammenhangs zwischen den Elementen oder dgl. dient. Die einzelnen Elemente der technischen Anlage werden in dem Anlagenbild durch jeweilige Bildelemente graphisch repräsentiert. Das Anlagenbild umfasst vorliegend wenigstens ein Bildelement.

Der Visualisierungsdienst ist zu einem (ersten) Teil auf dem Operator Station Server und zu einem (zweiten) Teil auf dem Operator Station Client implementiert. Der erste Teil auf dem Operator Station Server stellt die für das Anlagenbild notwendigen Daten zusammen bzw. bereit und überträgt die Visualisierungsdaten an den Operator Station Client. Dort hat der zweite Teil des Visualisierungsdienstes die Aufgabe, eine visuelle Darstellung des Anlagenbildes mit dem wenigstens einen Bildelement für einen Monitor, ein Smartphone, ein Tablet oder dergleichen zu erzeugen.

Erfindungsgemäß ist der Visualisierungsdienst dabei dazu ausgebildet, eine Information über einen Übertragungsstatus der Mehrzahl von Bildelementen von dem Operator Station Server zu dem Operator Station Client zu ermitteln und dem Operator des Leitsystems visuell darzustellen. Für die Ermittlung des Übertragungsstatus ist dem ersten Teil des Visualisierungsdienstes vorteilhafterweise bekannt, welche Menge an Daten er bezüglich der Bildelemente an den Operator Station Client übertragen muss. Über eine entsprechende Rückmeldung bzw. Rückmeldungen des zweiten Teil des Visualisierungsdienstes kann der Visualisierungsdienst den Übertragungsstatus der Bildelemente bestimmen und an den Operator Station Client übermitteln. Durch diesen kann der aufsummierte Übertragungsstatus der Bildelemente dann einem Operator des Leitsystems visuell dargestellt werden.

Das erfindungsgemäße Leitsystem ermöglicht eine Indikation des aufsummierten Ladezustandes der Bildelemente für eine effizientere Bedienung und Beobachtung der technischen Anlage. Der Operator erhält durch das Leitsystem Kenntnis darüber, ab wann das aufgeschlagene Anlagenbild mit der Mehrzahl von Bildelementen vollständig beobachtet werden kann.

Das jeweilige Bildelement kann einen zu einer Laufzeit der technischen Anlage veränderbaren Inhalt aufweisen, insbesondere eine Trendanzeige für Messwerte der technischen Anlage, eine Meldefolgeanzeige für Meldungen des Leitsystems, ein Videobild oder eine Regleroptimierungsfunktion. Es kann sich bei dem jeweiligen Bildelement dabei um einen sogenannten (Web-)Container handeln, der variabel mit dynamisch veränderbarem Inhalt gefüllt sein kann.

Das Anlagenbild umfasst eine Mehrzahl von Bildelementen, wobei der Visualisierungsdienst dazu ausgebildet ist, eine Information über einen aufsummierten Übertragungsstatus der Mehrzahl von Bildelementen von dem Operator Station Server zu dem Operator Station Client zu ermitteln und dem Operator des Leitsystems visuell darzustellen.

Der Visualisierungsdienst ist dabei dazu ausgebildet, eine Information über einen aufsummierten Übertragungsstatus der Bildelemente von dem Operator Station Server zu dem Operator Station Client zu ermitteln und dem Operator des Leitsystems visuell darzustellen.

Der aufsummierte Übertragungsstatus stellt einen booleschen Wahrheitswert dar. Dabei kann es sich um die beiden booleschen Wahrheitswerte "FALSCH" und "WAHR" handeln. Der Übertragungsstatus weist dabei so lange den Wahrheitswert "FALSCH" auf, bis die Übertragung des jeweiligen Bildelementes von dem Operator Station Server zu dem Operator Station Client vollständig abgeschlossen ist.

Der aufsummierte Übertragungsstatus kann eine Anzahl Übertragungsstatus mit einem bestimmten booleschen Wahrheitswert darstellen, insbesondere dem booleschen Wahrheitswert FALSCH. Der Operator erhält dadurch einen sofortigen Überblick, wie viele Bildelemente eines Anlagenbildes noch nicht vollständig an den Operator Station Client übertragen worden sind. Besonders bevorzugt ist der Übertragungsstatus eines Bildelementes durch eine Interaktion des Operators mit dem Bildelement beeinflussbar. Dies kann zum Beispiel bedeuten, dass ein Operator, der ein Bildelement bedient, in dem ein Archiv für Meldungen der technischen Anlage adressiert ist, ein Nachladen oder Neuladen (bzw. Neuübertragen) des Inhalts des Bildelements auslöst. Dies kann dadurch bedingt sein, dass nur ein Teil der Meldungen des Archivs standardmäßig an den Operator Station Client übertragen werden, um das Kommunikationsaufkommen und die Speicherbelastung des Operator Station Clients gering zu halten.

Die Aktion des Operators kann dann hierbei zu einem Wechsel des Übertragungsstatus des Bildelements führen, beispielsweise von "WAHR" zu "FALSCH".

Der Übertragungsstatus kann dem Operator auf verschiedene Arten und Weisen dargestellt werden. Der Visualisierungsdienst kann dazu ausgebildet sein, dem Operator den Übertragungsstatus eines jeweiligen Bildelementes durch eine Variation einer Darstellungsintensität des jeweiligen Bildelementes visuell darzustellen. Das jeweilige Bildelement kann demnach beispielsweise "ausgegraut" werden, um dem Operator intuitiv darauf hinzuweisen, dass das Bildelement noch nicht vollständig geladen ist. Die Darstellungsintensität kann sich dabei in diskreten Schritten (z.B. für boolesche Wahrheitswerte) ändern.

Der Visualisierungsdienst kann weiterhin dazu ausgebildet sein, den Übertragungsstatus eines jeweiligen Bildelementes dem Operator durch eine Variation einer Darstellungsfarbe des Bildelements visuell darzustellen. Diese Ausgestaltungsformen ermöglichen eine besonders intuitive und rasche Erfassung des Übertragungsstatus der Bildelemente eines Anlagenbildes.

Im Rahmen einer vorteilhaften Weiterbildung der Erfindung ist das Leitsystem dazu ausgebildet, Informationen darüber in einem Speicher zu hinterlegen, über welche Zeitdauer hinweg ein Bildelement eines Anlagenbildes welchen Übertragungsstatus aufgewiesen hat. Mithilfe dieser Informationen, insbesondere wann eine Übertragung eines Bildelementes begonnen und wann sie geendet hat, können Rückschlüsse getroffen werden, welches Anlagenbild potenziell bei einer Projektierung einer Automatisierung für die technische Anlage "überladen" wurde. Es kann zudem ermittelt werden, welches Bildelement oder welche Bildelemente eines Anlagenbildes für lange Übertragungszeiten verantwortlich sind und daher ggf. zu überarbeiten sind.

Dadurch lassen sich Anlagenbilder gezielt hinsichtlich der Darstellungsqualität und -aktualität optimieren.

Die zuvor formulierte Aufgabe wird zudem gelöst durch die Verwendung eines Leitsystems, welches wie zuvor erläutert ausgebildet ist, zum Betrieb einer technischen Anlage, insbesondere Prozess- oder Fertigungsanlage.

Die Aufgabe wird zudem gelöst durch ein Verfahren zur visuellen Darstellung eines Anlagenbildes einer technischen Anlage, insbesondere Prozess- oder Fertigungsanlage, durch ein Leitsystem, das einen Operator Station Server und einen Operator Station Client aufweist, wobei das Anlagenbild eine Mehrzahl von Bildelementen umfasst, das Verfahren umfassend:
a) Übertragen des Anlagenbilds der technischen Anlage von dem Operator Station Server an den Operator Station Client, wobei das Anlagenbild die Mehrzahl von Bildelementen umfasst;
b) Visuelle Darstellung des Anlagenbildes mit der Mehrzahl von Bildelementen an einen Operator des Leitsystems durch den Operator Station Client;
dadurch gekennzeichnet, dass das Verfahren zusätzlich die folgenden Verfahrensschritte umfasst:
c) Beim Übertragen des Anlagenbildes mit der Mehrzahl von Bildelementen, Ermitteln einer Information über einen aufsummierten Übertragungsstatus der Mehrzahl von Bildelementen von dem Operator Station Server zu dem Operator Station Client;
d) Zusammen mit der visuellen Darstellung des Anlagenbildes mit der Mehrzahl von Bildelementen auch visuelle Darstellung der Information über den aufsummierten Übertragungsstatus des Bildelements von dem Operator Station Server zu dem Operator Station Client, wobei der aufsummierte Übertragungsstatus einen booleschen Wahrheitswert darstellt.

Das Ermitteln der Information über den aufsummierten Übertragungsstatus des Bildelements kann von einem Visualisierungsdienst durchgeführt werden, wobei ein erster Teil des Visualisierungsdienstes auf dem Operator Station Server und ein zweiter Teil des Visualisierungsdienstes auf dem Operator Station Client implementiert ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Es zeigen:
- FIG 1: ein erfindungsgemäßes Leitsystem in einer Prinzipskizze;
- FIG 2: eine Objektmodell eines erfindungsgemäßen Leitsystems;
- FIG 3: eine erste visuelle Darstellung eines Anlagenbildes durch ein erfindungsgemäßes Leitsystem; und
- FIG 4: eine zweite visuelle Darstellung eines Anlagenbildes durch ein erfindungsgemäßes Leitsystem.

In FGI 1 ist ein Teil eines erfindungsgemäßen Leitsystems 1 einer als Prozessanlage, d.h. als verfahrenstechnische Anlage, ausgebildeten technischen Anlage dargestellt. Das Leitsystem 1 umfasst einen Operator Station Server 2 und einen Operator Station Client 3.

Der Operator Station Server 2 und der Operator Station Client 3 sind über einen Terminalbus 4 miteinander und optional mit nicht dargestellten weiteren Komponenten des Leitsystems 1 wie einem Prozessdatenarchiv verbunden.

Ein Benutzer bzw. Operator kann zum Zwecke des Bedienens und Beobachtens über den Operator Station Client 3 mittels des Terminalbus 4 auf den Operator Station Server 2 zugreifen. Der Terminalbus 4 kann, ohne sich darauf zu beschränken, beispielsweise als Industrial Ethernet ausgebildet sein.

Der Operator Station Server 2 weist eine Geräteschnittstelle 5 auf, die mit einem Anlagenbus 6 verbunden ist. Über diese Geräteschnittstelle 5 kann der Operator Station Server 2 mit einem Automatisierungsgerät 7 sowie mit optional vorhandenen weiteren Komponenten der Prozessanlage kommunizieren. Der Anlagenbus 6 kann, ohne sich darauf zu beschränken, beispielsweise als Industrial Ethernet ausgebildet sein. Das Automatisierungsgerät 7 kann mit einer beliebigen Anzahl an Subsystemen (nicht dargestellt) verbunden sein.

Auf dem Operator Station Server 2 sind ein Alarmmeldungsdienst 8, ein erster Teil 9a eines Anlagenbilddienstes, ein Überwachungsdienst 10 und ein erster Teil 11a eines Operatordienstes implementiert. Der Alarmmeldungsdienst 8, der erste Teil 9a des Anlagenbilddienstes, der Überwachungsdienst 10 und der erste Teil 11a des Operatordienstes stellen einen auf dem Operator Station Server 2 implementierten ersten Teil 12a eines Visualisierungsdienstes dar. Zudem sind auf dem Operator Station Server 2 (neben weiteren, nicht dargestellten Komponenten/Diensten) ein Prozessabbild 13 und eine Konfigurationsdatenbank 14 implementiert.

Der erste Teil des Anlagenbilddienstes 9a entnimmt aus der Konfigurationsdatenbank 14 ein darzustellendes Anlagenbild 15. Das Anlagenbild 15 wird von dem ersten Teil des Anlagenbilddienstes 9a an einen zweiten Teil 9b des Anlagenbilddienstes übertragen, welcher auf dem Operator Station Client 3 implementiert ist. Der zweite Teil 9b des Anlagenbilddienstes und ein zweiter Teil 11b des Operatordienstes sind dabei Bestandteile eines zweiten Teils 12b des Visualisierungsdienstes, der auf dem Operator Station Client 3 implementiert ist, und der die für die visuelle Darstellung des Anlagenbildes 15 notwendigen Informationen (u.a. Renderinginformationen) bereitstellt.

Das Anlagenbild 15 umfasst (neben anderen Bildelementen) zwei Bildelemente 16, 17, deren Inhalt variabel vorgebbar ist und sich dynamisch ändern kann. Beispielsweise kann es sich bei den Bildelementen 16, 17 um Trendanzeigen für einen Prozessmesswert, um Videodaten oder um Alarmmeldungsanzeigen handeln.

Der Visualisierungsdienst 12a, 12b ist dazu ausgebildet, einen Übertragungsstatus des jeweiligen Bildelementes 16, 17 zu ermitteln. Hierzu wartet der erste Teil 12a des Visualisierungsdienstes auf eine Bestätigung des zweiten Teils 12b des Visualisierungsdienstes, dass das jeweilige Bildelement 16, 17 übertragen worden ist. Aus dieser bidirektionalen Kommunikation zwischen dem Operator Station Server 2 und dem Operator Station Client 3 ermittelt der Visualisierungsdienst 12a, 12b den jeweiligen Übertragungsstatus und übermittelt ihn an den Operator Station Client 3, der ihn einem Operator des Leitsystems 1 visuell darstellt.

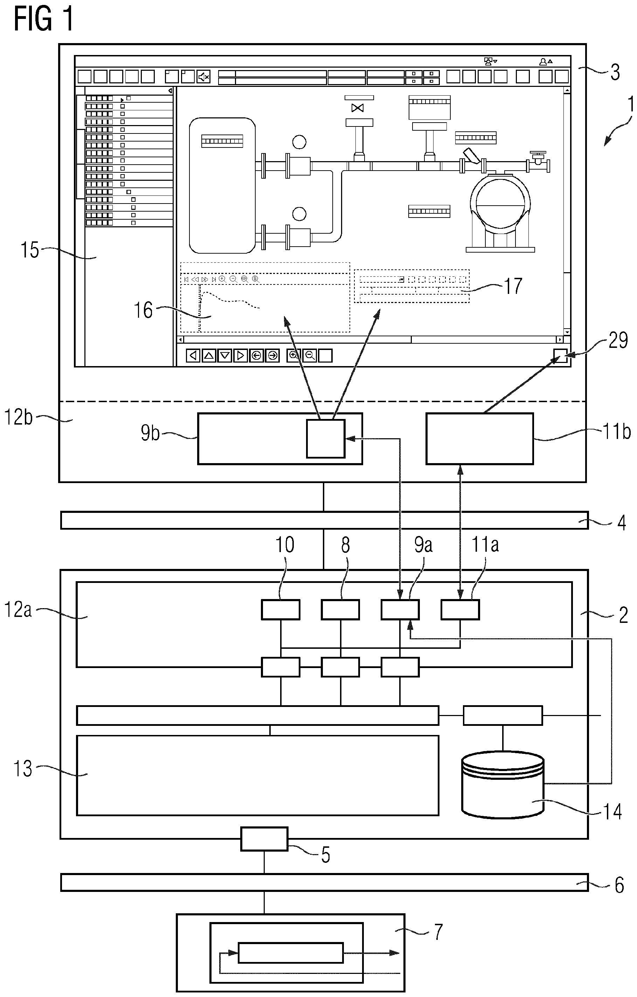

In FIG 1 sind die beiden Bildelemente 16, 17 mit einer unterbrochenen Linie ("gestrichelt") dargestellt, was dem Operator auf eine intuitive Art und Weise den Übertragungsstatus (noch nicht vollständig übertragen bzw. "FALSCH") des jeweiligen Bildelementes 16, 17 vermittelt.

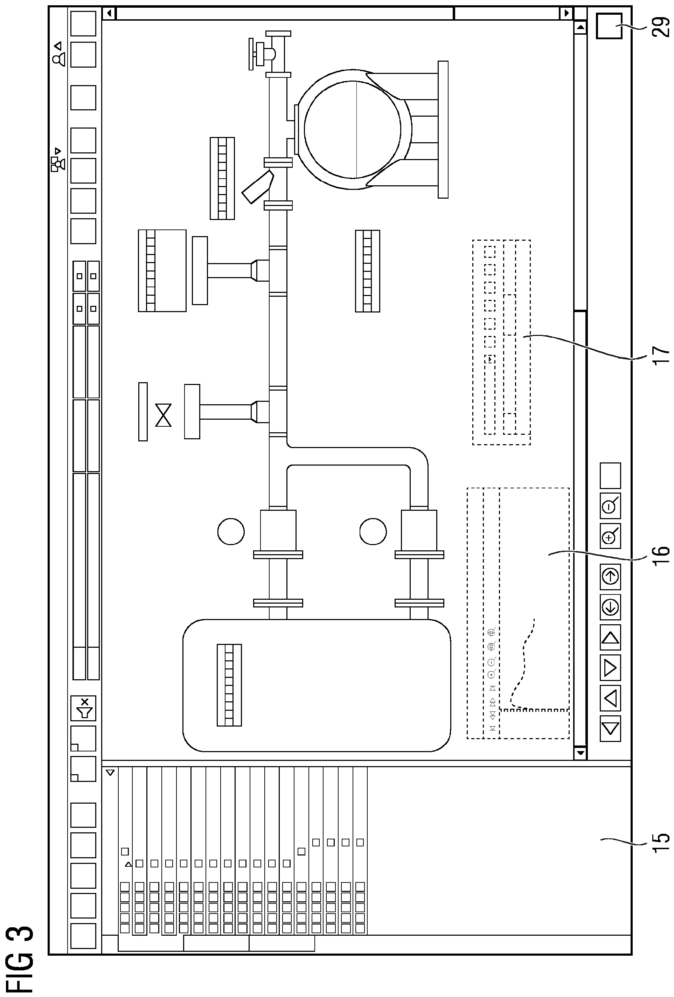

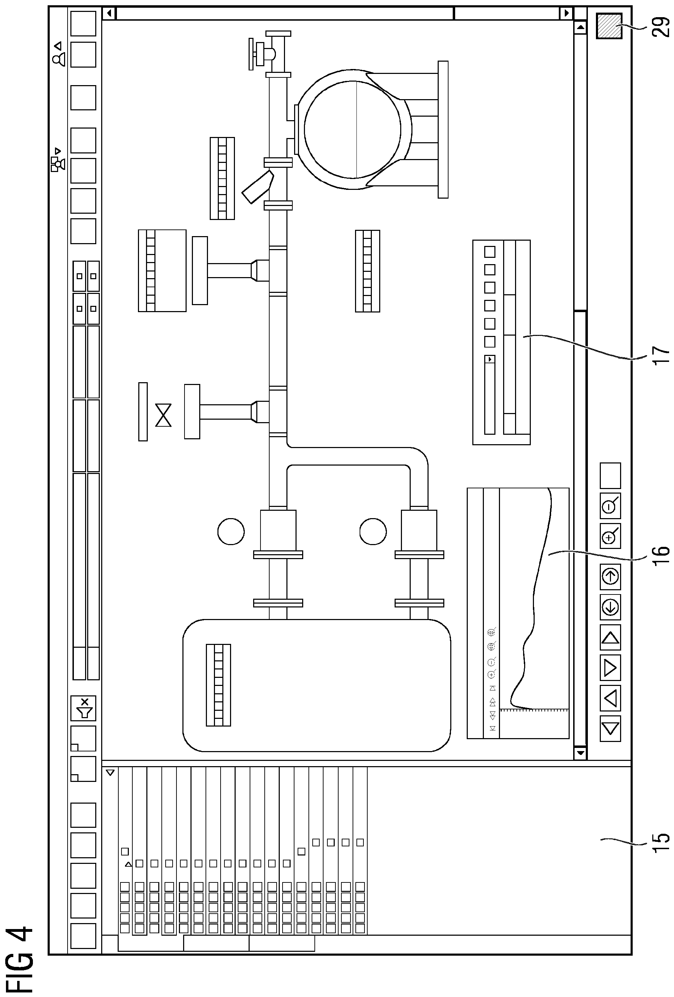

Der erste Teil des Operatordienstes 11a bildet in Zusammenarbeit mit dem Überwachungsdienst 10 einen aufsummierten Übertragungsstatus , der in diesem Fall den Wert "2" aufweist. Dies bedeutet, dass zwei Bildelemente 16, 17 nicht den Übertragungsstatus "vollständig übertragen" oder "WAHR" aufweisen. Dieser Wert "2" wird dem Operator von dem zweiten Teil 11b des Operatordienstes in einem rechteren unteren Bereich des Anlagenbildes 15 visuell dargeboten (vgl. hierzu auch die FIG 3 und FIG 4).

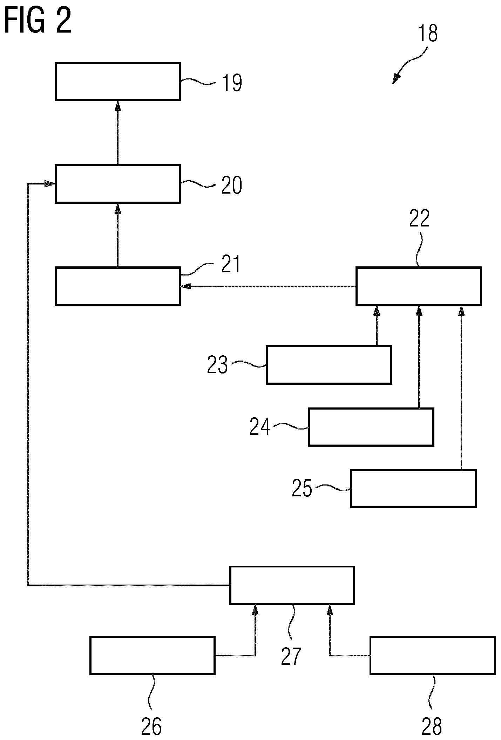

In FIG 2 ist ein zu dem Leitsystem 1 gehöriges Objektmodell 18 dargestellt. Ein Automatisierungsprojekt 19 weist 1 bis f Anlagenbilder 20 (Plant Displays) auf. Ein Anlagenbild 20 setzt sich aus 1 bis m Bildelementen 21 (Screen Items) zusammen. Eine Spezialisierung eines Bildelementes 21 ist ein komplexes Steuerungselement 22 (Complex Control). Dieses komplexe Steuerungselement 22 kann wiederum eine Meldefolgeanzeige 23, eine Trendanzeige 24 oder eine Webcamanzeige 25 sein.

Das komplexe Steuerungselement 22 weist ein Attribut "Übertragungsstatus" auf, welches den Übertragungsstatus des komplexen Steuerungselementes 22 von dem Operator Station Server 2 zu dem Operator Station Client 3 angibt. Das Attribut weist bei einer beginnenden Übertragung des Anlagenbildes 20 zu dem Operator Station Client 3 einen Wert "FAlSCH" auf. Erst wenn die jeweilige Spezialisierung (Meldefolgeanzeige 23, Trendanzeige 24 etc.) die Inhalte des Steuerungselementes 22 aktualisiert und übertragen hat, wird durch die Spezialisierungen der Übertragungsstatus bzw. das Attribut auf den Wert "WAHR" gesetzt. Dies kann beispielsweise bedeuten, dass alle historischen Diagnosealarme der Meldefolgeanzeige 23 in den Operator Station Client 3 geladen und dem Operator des Leitsystems 1 visuell dargestellt worden sind.

Der Übertragungsstatus kann wieder auf "FALSCH" gesetzt werden, wenn eine erneute Übertragung erforderlich sein sollte - beispielsweise, wenn der Operator in der Historie der Meldefolgeanzeige 23 nach historischen Einträgen sucht.

Die Übertragungsstatus der einzelnen Spezialisierungen des komplexen Steuerungselementes 22 werden von einem Überwachungsdienst 26 (entspricht dem Überwachungsdienst 10 aus FIG 1) ermittelt und einem Visualisierungsdienst 27 zur Verfügung gestellt. Der Visualisierungsdienst 27 entspricht dem Visualisierungsdienst 9a, 9b aus FIG 1 und ist zu einem ersten Teil auf dem Operator Station Server 2 und zu einem zweiten Teil auf dem Operator Station Client 3 implementiert. Der Visualisierungsdienst 9a, 9b überträgt das Anlagenbild 20 oder die Anlagenbilder 20 von dem Operator Station Server 2 an den Operator Station Client 3. In der Übertragung sind das oder die Bildelemente 21 mit deren Übertragungsstatus enthalten.

Ein Operatordienst 28 (entspricht dem Operatordienst 11a, 11b) überträgt einen aufsummierten Übertragungsstatus der Bildelemente 20 des Anlagenbildes 20 an den Operator Station Client 3. Den aufsummierten Übertragungsstatus hat zuvor der Überwachungsdienst 26 ermittelt und an den Visualisierungsdienst 27 übertragen (an den auf dem Operator Station Server implementierten ersten Teil). Der Operatordienst 28 ruft den aufsummierten Übertragungsstatus dann von dem Visualisierungsdienst 27 ab und überträgt ihn an den Operator Station Client 3.

In FIG 3 ist das Anlagenbild 15 aus FIG 1 vergrößert und ohne weitere Teile des Leitsystems 1 dargestellt. Es ist zu erkennen, dass die Bildelemente 16, 17 durch eine unterbrochene Umrandung als "nicht vollständig übertragen / geladen" gekennzeichnet sind. Zusätzlich sind die Bildelemente 16, 17 in ihrer Darstellungsintensität reduziert. In der rechten, unteren Ecke ist als zusätzliche Information für den Operator der aufsummierte Übertragungsstatus 29 dargestellt, welcher in diesem Fall den Wert "2" aufweist, da zwei Bildelemente 16, 17 nicht vollständig übertragen sind.

FIG 4 zeigt das Anlagenbild 15 aus FIG 3, wobei alle Bildelemente 16, 17 vollständig an den Operator Station Client 3 übertragen worden sind, weshalb die Bildelemente 16, 17 nun normal visuell dargestellt sind. Der aufsummierte Übertragungsstatus 29 wird durch ein (grünes) Rechteck (ohne Zahlenwert oder mit dem Zahlenwert "0") dargestellt, was den Operator intuitiv darauf hinweist, dass alle Bildelemente 16, 17 des Anlagenbildes 15 vollständig von dem Operator Station Server 2 auf den Operator Station Client 3 übertragen worden sind.

Insgesamt kann durch die Erfindung ein Beitrag für eine höhere Verlässlichkeit und Aktualität des Leitsystems der technischen Anlage geleistet werden, speziell bei Anwendung eines webbasierten Leitsystems.

## Patentansprüche

1. Leitsystem (1) für eine technische Anlage, das einen Operator Station Server (2) und einen Operator Station Client (3) aufweist,
wobei der Operator Station Server (2) dazu ausgebildet ist, zur Bedienung und Beobachtung ein Anlagenbild (15, 20) der technischen Anlage an den Operator Station Client (3) zu übertragen, wobei das Anlagenbild (15, 20) eine Mehrzahl von Bildelementen (16, 17) umfasst,
und wobei der Operator Station Client (3) dazu ausgebildet ist, das Anlagenbild (15, 20) mit der Mehrzahl von Bildelementen (16, 17) einem Operator der technischen Anlage visuell darzustellen,
und wobei das Leitsystem (1) einen Visualisierungsdienst (9a, 9b, 27) aufweist, der zu einem ersten Teil (9a) auf dem Operator Station Server (2) und zu einem zweiten Teil (9b) auf dem Operator Station Client (3) implementiert ist,
**dadurch gekennzeichnet, dass**
der Visualisierungsdienst (9a, 9b, 27) dazu ausgebildet ist, eine Information über einen aufsummierten Übertragungsstatus der Mehrzahl von Bildelementen (16, 17) von dem Operator Station Server (2) zu dem Operator Station Client (3) zu ermitteln und dem Operator des Leitsystems (1) visuell darzustellen, wobei der aufsummierte Übertragungsstatus einen booleschen Wahrheitswert darstellt.

2. Leitsystem (1) nach Anspruch 1, bei dem der aufsummierte Übertragungsstatus (29) eine Anzahl Übertragungsstatus mit einem bestimmten booleschen Wahrheitswert darstellt.

3. Leitsystem (1) nach einem der vorangegangenen Ansprüche, bei dem der Übertragungsstatus eines Bildelementes (16, 17) durch eine Interaktion des Operators mit dem Bildelement (16, 17) beeinflussbar ist.

4. Leitsystem (1) nach einem der vorangegangenen Ansprüche, das dazu ausgebildet ist, Informationen darüber in einem Speicher zu hinterlegen, über welche Zeitdauer hinweg ein Bildelement (16, 17) eines Anlagenbildes (15, 20) welchen Übertragungsstatus aufgewiesen hat.

5. Leitsystem (1) nach einem der vorangegangenen Ansprüche, bei dem das Bildelement (16, 17) einen zu einer Laufzeit der technischen Anlage veränderbaren Inhalt aufweist.

6. Verwendung eines Leitsystems (1) gemäß einem der Ansprüche 1 bis 5 zum Betrieb einer technischen Anlage.

7. Verfahren zur visuellen Darstellung eines Anlagenbildes (15, 20) einer technischen Anlage durch ein Leitsystem (1), das einen Operator Station Server (2) und einen Operator Station Client (3) aufweist, wobei das Anlagenbild (15, 20) eine Mehrzahl von Bildelementen (16, 17) umfasst, das Verfahren umfassend:
a) Übertragen eines Anlagenbilds (15, 20) der technischen Anlage von dem Operator Station Server (2) an den Operator Station Client (3), wobei das Anlagenbild (15, 20) die Mehrzahl von Bildelementen (16, 17) umfasst;
b) Visuelle Darstellung des Anlagenbildes (15, 20) mit der Mehrzahl von Bildelementen (16, 17) an einen Operator des Leitsystems (1) durch den Operator Station Client (3);
**dadurch gekennzeichnet, dass** das Verfahren zusätzlich die folgenden Verfahrensschritte umfasst:
c) Beim Übertragen des Anlagenbildes (15, 20) mit der Mehrzahl von Bildelementen (16, 17), Ermitteln einer Information über einen aufsummierten Übertragungsstatus der Mehrzahl von Bildelementen (16, 17) von dem Operator Station Server (2) zu dem Operator Station Client (3);
d) Zusammen mit der visuellen Darstellung des Anlagenbildes (15, 20) mit der Mehrzahl von Bildelementen (16, 17) auch visuelle Darstellung der Information über den aufsummierten Übertragungsstatus der Mehrzahl von Bildelementen (16, 17) von dem Operator Station Server (2) zu dem Operator Station Client (3), wobei der aufsummierte Übertragungsstatus einen booleschen Wahrheitswert darstellt.

8. Verfahren nach Anspruch 7, bei dem das Ermitteln der Information über den Übertragungsstatus des Bildelements (16, 17) von einem Visualisierungsdienst (9a, 9b, 27) durchgeführt wird, wobei ein erster Teil des Visualisierungsdienstes (9a) auf dem Operator Station Server (2) und ein zweiter Teil des Visualisierungsdienstes (9b) auf dem Operator Station Client (3) implementiert ist.

## Claims

1. Control system (1) for a technical plant, having an operator station server (2) and an operator station client (3),
wherein the operator station server (2) is embodied to transmit, for operating and observation, a plant mimic diagram (15, 20) of the technical plant to the operator station client (3), wherein the plant mimic diagram (15, 20) comprises a plurality of diagram elements (16, 17),
and wherein the operator station client (3) is embodied to visually display the plant mimic diagram (15, 20) with the plurality of diagram elements (16, 17) to an operator of the technical plant,
and wherein the control system (1) has a visualisation service (9a, 9b, 27), which is implemented on the operator station server (2) for a first part (9a) and on the operator station client (3) for a second part (9b),
**characterised in that**
the visualisation service (9a, 9b, 27) is embodied to ascertain information about an accumulated transmission status of the plurality of diagram elements (16, 17) from the operator station server (2) to the operator station client (3) and to display this visually to the operator of the control system (1), wherein the accumulated transmission status represents a logical Boolean value.

2. Control system (1) according to claim 1 in which the accumulated transmission status (29) represents a number of transmission statuses with a specific logical Boolean value.

3. Control system (1) according to one of the preceding claims in which the transmission status of a diagram element (16, 17) can be influenced by interaction between the operator and the diagram element (16, 17).

4. Control system (1) according to one of the preceding claims, which is embodied to store information in a memory about a period of time over which a diagram element (16, 17) of a plant mimic diagram (15, 20) has had which transmission status.

5. Control system (1) according to one of the preceding claims in which the diagram element (16, 17) has content that can be changed during runtime of the technical plant.

6. Use of a control system (1) according to one of claims 1 to 5 for operating a technical plant.

7. Method for visually displaying a mimic diagram (15, 20) of a technical plant by a control system (1) having an operator station server (2) and an operator station client (3), wherein the plant mimic diagram (15, 20) comprises a plurality of diagram elements (16, 17), the method comprising:
a) transmitting a mimic diagram (15, 20) of the technical plant from the operator station server (2) to the operator station client (3), wherein the plant mimic diagram (15, 20) comprises the plurality of diagram elements (16, 17);
b) visually displaying the plant mimic diagram (15, 20) with the plurality of diagram elements (16, 17) to an operator of the control system (1) by way of the operator station client (3);
**characterised in that** the method comprises the additional method steps of:
c) during transmission of the plant mimic diagram (15, 20) with the plurality of diagram elements (16, 17), ascertaining information about an accumulated transmission status of the plurality of diagram elements (16, 17) from the operator station server (2) to the operator station (3);
d) together with the visual display of the plant mimic diagram (15, 20) with the plurality of diagram elements (16, 17) also visually displaying the information about the accumulated transmission status of the plurality of diagram elements (16, 17) from the operator station server (2) to the operator station client (3), wherein the accumulated transmission status represents a logical Boolean value.

8. Method according to claim 7 in which the ascertainment of the information about the transmission status of the diagram element (16, 17) is performed by a visualisation service (9a, 9b, 27), wherein a first part of the visualisation service (9a) is implemented on the operator station server (2) and a second part of the visualisation service (9b) is implemented on the operator station client (3).

## Revendications

1. Système (1) de conduite d'une installation technique, qui a un Operator Station Server (2) et un Operator Station Client (3),
dans lequel l'Operator Station Server (2) est constitué, pour la commande et l'observation, pour transmettre une image (15, 20) de l'installation technique à l'Operator Station Client (3), dans lequel l'image (15, 20) de l'installation comprend une pluralité d'éléments (16, 17) d'image,
et dans lequel l'Operator Station Client (3) est constitué pour représenter visuellement un Operator de l'installation technique, l'image (15, 20) de l'installation ayant la pluralité d'éléments (16, 17) d'image,
et dans lequel le système (1) de conduite a un service (9a, 9b, 27) de visualisation, qui est mis en œuvre pour une première partie (9a) sur l'Operator Station Server (2) et pour une deuxième partie (9b) sur l'Operator Station Client (3),
**caractérisé en ce que**
le service (9a, 9b, 27) de visualisation est constitué pour déterminer une information sur un statut de transmission sommé de la pluralité d'éléments (16, 17) d'image de l'Operator Station Server (2) à l'Operator Station Client (3) et pour le représenter visuellement à l'Operator du système (1) de conduite, dans lequel le statut de transmission sommé représente une valeur de vérité booléenne.

2. Système (1) de conduite suivant la revendication 1, dans lequel le statut (29) de transmission sommé représente un nombre de statuts de transmission ayant une valeur de vérité booléenne déterminée.

3. Système (1) de conduite suivant l'une des revendications précédentes, dans lequel le statut de transmission d'un élément (16, 17) d'image peut être influencé par une interaction de l'Operator avec l'élément (16, 17) d'image.

4. Système (1) de conduite suivant l'une des revendications précédentes, qui est constitué pour mettre dans une mémoire de l'information sur quelle durée, un élément (16, 17) d'image d'une image (15, 20) de l'installation a présenté quel statut de transmission.

5. Système (1) de conduite suivant l'une des revendications précédentes, dans lequel l'élément (16, 17) d'image a un contenu variable en fonction du temps de marche de l'installation technique.

6. Utilisation d'un système (1) de conduite suivant l'une des revendications 1 à 5 pour faire fonctionner une installation technique.

7. Procédé de représentation visuelle d'une image (15, 20) d'une installation technique par un système (1) de conduite, qui a un Operator Station Server (2) et un Operator Station Client (3), dans lequel l'image (15, 20) de l'installation comprend une pluralité d'éléments (16, 17) d'image, le procédé comprenant :
a) transmission d'une image (15, 20) de l'installation technique de l'Operator Station Server (2) à l'Operator Station Client (3), dans lequel l'image (15, 20) de l'installation comprend la pluralité d'éléments (16, 17) d'image ;
b) représentation visuelle, par l'Operator Station Client (3), de l'image (15, 20) de l'installation ayant la pluralité d'éléments (16, 17) d'image à un Operator du système (1) de conduite ;
**caractérisé en ce que** le procédé comprend en outre les stades de procédé suivants :
c) à la représentation de l'image (15, 20) de l'installation ayant la pluralité d'éléments (16, 17) d'image, détermination d'une information sur un statut de transmission sommé de la pluralité d'éléments (16, 17) d'image de l'Operator Station Server (2) à l'Operator Station Client (3) ;
d) ensemble avec la représentation visuelle de l'image (15, 20) de l'installation ayant la pluralité d'éléments (16, 17) d'image, également représentation visuelle de l'information sur le statut de transmission sommé de la pluralité d'éléments (16, 17) d'image de l'Operator Station Server (2) à l'Operator Station Client (3), dans lequel le statut de transmission sommé représente une valeur de vérité booléenne.

8. Procédé suivant la revendication 7, dans lequel on effectue la détermination de l'information sur le statut de transmission de l'élément (16, 17) d'image par un service (9a, 9b, 27) de visualisation, dans lequel une première partie du service (9a) de visualisation est mise en œuvre sur l'Operator Station Servor (2) et une deuxième partie du service (9b) de visualisation sur l'Operator Station Client (3).
